(19) Europäisches Patentamt
European Patent Office
Office européen des brevets

(11) EP 0 736 250 A1

(12) EUROPEAN PATENT APPLICATION
published in accordance with Art. 158(3) EPC

(43) Date of publication:
09.10.1996 Bulletin 1996/41

(21) Application number: 95930723.2

(22) Date of filing: 08.09.1995

(51) Int. Cl.[6]: **A01N 33/12**, A01N 37/20

(86) International application number:
PCT/JP95/01790

(87) International publication number:
WO 96/12404 (02.05.1996 Gazette 1996/20)

(84) Designated Contracting States:
AT BE CH DE DK ES FR GB GR IE IT LI LU MC NL PT SE

(30) Priority: 21.10.1994 JP 257022/94

(71) Applicant: JAPAN CLINIC COMPANY LIMITED
Kyoto-shi Kyoto 616 (JP)

(72) Inventor: KUWABARA, Katsuhiko
Chiba 285 (JP)

(74) Representative: Grünecker, Kinkeldey,
Stockmair & Schwanhäusser
Anwaltssozietät
Maximilianstrasse 58
80538 München (DE)

# (54) ANTIMICROBIAL AGENT CONTAINING QUATERNARY AMMONIUM SALT

(57) Microbicidal composition, based on a salt of DiAlkylBenzylCetyl Ammonium Salts, (DABCAS), having a very rapid and persistent biocidal activity, are presented. The new mixtures of compounds contains "particular" amines, which exhibit good self stability and excellent germicidal activity.

These microbicidal compositions show a wide area of use as disinfectant of all non-adsorbing surfaces: specially sanitary applications as disinfecting and sterilizing "critical surfaces" of surgery; general medicine and surgeon tools; medical, veterinary and dentist devices; agricultural applications, as phytosanitary; as fungicidal and fungistatic applied on all surfaces and fibrous materials, natural, synthetics and/or mixed; air conditioned systems: devices and filters; and use also as water disinfectant.

It is also used for sterilizing and inhibiting a growth of bacillus in the foods produced using microorganisms, dairy products, foods and drinks produced by fermentation, agricultural nutrients related to the agricultural chemistry, and edible plants or the like and used for controlling a growth of the microorganisms or fermentation process.

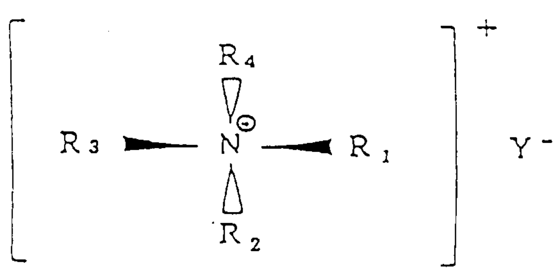

EP 0 736 250 A1

## Description

### TECHNICAL FIELD

The present invention relates to a microbicidal composition of low level toxicity, comprising a quaternary ammonium and halides. More specifically the invention relates to a new broad-spectrum microbicidal compositions of ultra rapid killing of all bacteria, fungi, spores and viruses comprising a polyethylene amide, ammonium oxide and an orthophosphoric ester.

In the present product, the preferable anions as a halogen are chlorides, iodides, tri-halides and mixtures thereof.

A particular germicidal activity is based on methylamines, due to the very low level toxicity without lowering the effectiveness of the composition of this invention.

### BACKGROUND ART

So far, many microbicidal agents have been proposed. Compounds related to the quaternary ammonium salt (hereinafter referred to as QUAT) have been found to be very useful as biocides, in particular as germicidal, bactericidal and fungicidal used principally in medical practice as a disinfectant. This compound is easily manufactured by reacting a quaternary amine with a halogen which has been disclosed in many documents for example, in US4.668.273 (Hasse J. May 26 1987) and PCT Application WO91/15120(Damotoft et al. Oct. 17, 1991) and the effectiveness of this microbicidal compposition as a biocide is also disclosed.

Especially a n-alkyltrimethyl ammonium salts and an alkylbezyldimethyl ammonium salt indicated as general formula shown below are well known compounds.

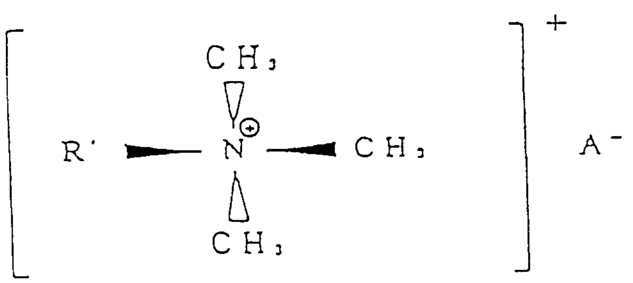

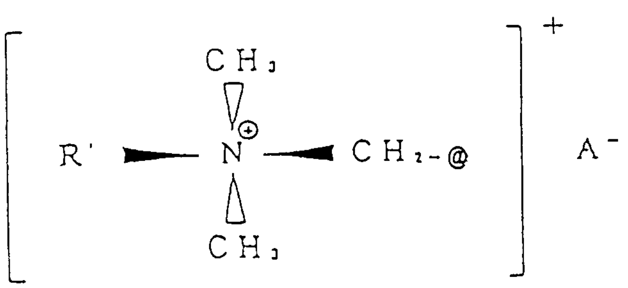

@=Phenyl group

where R' is an alkyl group or an alkylene group with straight chain or with side chains, n is an integer from 1 to 20, A is an anion selected from a halogen, a sulfate, a phosphate or an acetate. The effectiveness of the biocide is dependent on a length of the chain of the alkyl group or the like, which means the effectiveness of the composition is dependant on a number of carbon atoms comprising the alkyl group or the lke, and a form of the group, which means whether the alkyl group is a straight chain or with side chains.

In the case of quaternary ammonium bromides, the antimicrobial activity has been extensively studied as shown in Letters in Applied Microbiology 1(1985)pp 101. It discloses that the effectiveness maximizes for n-alkyl chains with 14 to 16 carbon atoms in length.

However, for n-alkyl tri-methylammonium chloride compounds the greatest sensitivity has been detected for alkyl groups with 14 carbon atoms long, while for dialkyldimethylammonium chlorides the best fungiestat activity was recorded for dialkyl groups with 10 carbon atoms, Hueck et al. [Applied Microbiology 14(1966)308)].

Although,all these compounds with quaternary ammonium salt ( QUAT) could in principle be used as good germicidal, but so far, they have found to be little use. The reason is probably to be found in their relatively high toxicity and that in order to get good performances, uneconomically large proportions of QUAT should be used to be effective.

Only a dimethyl alkyl quaternary ammonium chloride or a bezalconium chloride is a well known microbicidal composition.

There has been in the past a continuing effort to develop germicidal compositions stable and easy to manufacture.

A quaternary ammonium compounds are widely used as disinfectants and sterilizants; a vast literatures on their antimicrobial activity exist but are discussed here only a representative part of it, in particular the benzalkonium chlorides, which is a mixture of various alkyl-dimethylbenzylammonium chlorides.

Since 1949 in the United States Pharmacopoeia (USP) the edition, the generic name of BAC mixtures conform to the current USP specifications if, on a molar basis, at least 70% of the component species are n-alkyl substitutes of C=12,14 or 16, and when the C=12 component represents not less than 40% of the total content.

The European Pharmacopoeia (1969) defines BAC in yet a different manner, as a mixture of alkyl-dimethylbenzylammonium chlorides, in which the alkyl groups are of chain length between C8 and C18, no specification is set for the relative contributions of these towards the overall mixture. The British Pharmacopoeia (1980) defines BAC as being mixture of alkyl-dimethylbenzylammonium chlorides with an average empirical formula of C22 H40 N Cl. These criteria could be satisfied by a pure compound with n-alkyl equal to C11.

It is apparent that benzalkonium chloride can have a very wide range of compositions still conform to the various standards. In other words BAC does not have an exactly defined qualitative and quantitative composition Pattern.

Iodine and iodophors,are known to be excellent germicides. Iodine in solution, such as tincture, is a common medical germicide,however this type of use has invariably been subject to many serious disadvantages. Unfortunately, it is very irritating and injurious to tissues of the human body when it is used in concentrations high enough to be effective. And further it has a property of decolorizing property and also coloring property. The chloride and the bromide are also commonly used as a germicide but they have a problems as to corrosion and irritating odor. On the other hand, species that liberate iodine under normal use conditions, named iodophors, have their germicidal power limited to the amount of halogen liberated and the halogen released from the composition act as an biocide. The other type of the microbicidal composition is that the halogen atoms are chemically bonded therefore all the halogen atoms are not effective as a biocide. US Patent No.4. 824.867 and 4.883.917 disclose methods to manufacture the quaternary ammonium salt (QUAT).

Typically, the traditional quaternary ammonium halides,i. e. chlorides, have been showing biological properties inhibiting bacterial growth. This inhibition is attributed to the presence of a halogen in the vicinity of a positive charge of nitrogen in the tetrahedric structure of ammonium. However, soluble salt of quaternary ammonium in water presents serious problems. The halogen is immediately ionized in solution and thus its action is very rapid and its effects decreases in short time. As a consequence, a single halide does not contribute to bactericidal properties. On the contrary, we will show that when the anion is a tri-halogen or its mixture, the microbicidal properties of the quaternary ammonium halides are enormously improved and developed through slow release of halogen.

The conventional microbicidal composition release the halogen atoms very quickly and vapor pressure of the composition is rather low therefor the duration time of the biocide is short. The halogen atoms in the quaternary ammonium salt compounds (QUAT) do not contribute a function of the biocide, but if the anion is a sole tri-halogen or mixtures thereof , a release of the halogen becomes very slow, consequently the gemicidial effect becomes very strong.

An object of this invention is to present a product with a greatly extended shelf life activity, based on a stable equilibrium level of free-halogen is reached which does not change on storage.

A new invention is presented in order to overcome problems and disadvantages associated with the prior arts by proving microbicidal compositions comprising new species based on Dialkyl Benzyl Cetyl Ammonium Salts(hereinafter referred to as DABCAS).

It is an object of this invention to provide a quick and effective sterilizant mixtures which kill a broad spectrum of bacteria, spores, fungi and viruses on all surfaces. These novel microbicidal compositions can be used in different applications with much more persistent biocidal activity than the traditional quaternary ammonium salt, for example as benzalkonium chlorides, exhibiting very low toxicity and surprising rapid effects, at low concentrations.

Also these microbicidal compositions possess elevated improved stability even after addition of an excess of amines and/or a mixture of amines with other surfactants, herein described. That makes possible the incorporation of highly effective dialkylbenzylcetyl ammonium salts in different compositions, without loosing effectiveness and stability.

## DISCLOSURE OF INVENTION

To solve the above described problems the invention of this application provides a microbicidal composition defined as a general formula (I) shown as follows:

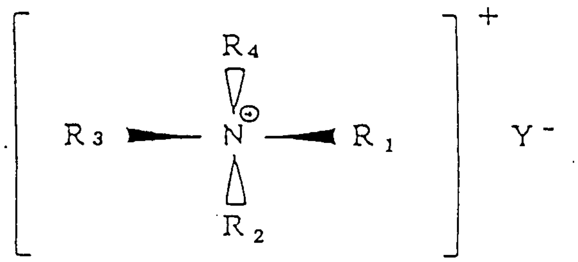

where:

R1 is an alkyl group having from 6 to 18 carbon atoms or a benzyl group;
R2 is selected from the group consisting of an alkyl group having from 1 to 18 carbon atoms, or a hydrogen atom, and an alkenyl group or an aralkyl group having 8 to 18 carbon atoms, R3 is an independent alkyl group having from 12 to 22 carbon atoms, and
R4 is an alkyl rest with 8 to 18 carbon atoms, or a composition defined by the general formula (II) shown as follows:

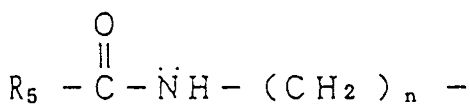

where R5 is an alkyl rest with 2 to 22 carbon atoms, n is an integer of 2 or 3, and Y is an anion comprising of 1 to 3 halogen-halide atoms,

wherein the following conditions (a) and/ or (b) are satisfied.

(a) A proportion of the molecule number of the R3 having more than 16 carbon atoms to the whole number of the molecules of the composition is more than 80%.
(b) A proportion of the number of the halogen ion consisting of 3 halogen atoms to the whole number of anions in the composition is more than 50 %.

The present invention also provides a use of said microbicidal agents to inhibit the growth of microorganisms by contact.
A microbicidal composition with above described conditions (a) and / or (b) are satisfied and further the following conditions (c) and/ or (d) are satisfied.

(c) A proportion of the molecule number of the R1 having a benzyl group to the whole number of the molecules of the composition is more than 70% and/or
(d) A proportion of the molecule number of the R2 having 14 to 16 carbon atoms to the whole molecule number of the composition is more than 40 %.

A microbicidal composition satisfying both conditions (a) and (b) is preferable and further a microbicidal composition satisfying all the conditions (a), (b), (c) and (d) is much more preferable.
A preferable embodiments of the invention satisfying the following extra conditions (a') and/or (b') are preferable.

(a') A proportion of the molecule number of the R3 having more than 16 carbon atoms to the whole number of the molecules of the composition is more than 90% or
(b') A proportion of the number of the halogen ion consisting of 3 halogen atoms to the whole number of anions in the composition is more than 70 %.

A microbicidal composition satisfying the condition (a') or (b') , or satisfying both (a') and (b') is preferable.
A microbicidal composition satisfying above described conditions (a') and / or (b') and further satisfying the conditions (c') and /or (d') is preferable.

(c') A proportion of the molecule number of the R1 having a benzyl group to the whole number of the molecules of the composition is more than 80% or

(d') A proportion of the molecule number of the R2 having 14 to 16 carbon atoms to the whole molecule number of the composition is more than 50 %.

A microbicidal composition satisfying the condition (c') or (d') , or satisfying both (c') and (d') is preferable.

Initially the novel compositions avoid the growth of the microorganisms and in short time kill them. The effective amounts of each component in the molecular complex can readily be determined by one skilled in the art, although they vary in accordance with the type of microorganism to be treated. Microbicidal compositions in each application of the invention have been adjusted in order to improve the efficiency in preventing and inhibiting the growth and killing a broad spectrum of germs:bacteria, molds, fungi, all spores and viruses, while a wide range of pH.

It is a further object of this invention to provide a broad-spectrum sterilant which will remain as an active persistent solution for at least several weeks; it is yet another object, to provide several applications of this sterilant which can be very effective on hard, non-adsorbent environmental surfaces such as sinks, as well as swimming pools, sanitizing dishes, cookware, floors and walls of dwellings, office buildings and restaurants, bathrooms, toilets, besides sanitary applications on critical surfaces of surgery, specially for sterilizing tools of medical surgical, veterinary and dentist, and all surfaces of clean rooms, also airway, in particular, in the air conditioned systems, devices, tubing and/ or filters; also as fugiicidal applications on fibrous materials, natural, synthetic and/or mixed; and agricultural applications as phytosanitary.

An important of this invention is to provide a synthesis method of the dialkylbenzylcetyl ammonium salts, DABCAS, and any other quaternary amine being obtained together as a reaction product. The invention, accordingly comprises a method of synthesizing both pure and impure form, of DABCAS and their microbicidal compositions.

The synthesis method comprising several steps will be detailed and the relation of one or more of such steps with respect to each of the others will be described. The composition and the relation of constituents will be exemplified in the following detailed disclosure, and the scope of the present invention will be indicated in the claims.

It is a further object of the present invention to provide varied microbicidal compositions effective for killing rapidly individual microorganisms or a combination of several different kinds of microorganisms; additional advantages of the invention will be set forth in part in the description which follows, or may be learned by practice of the invention.

In summary, this invention based in dialkylbenzylcetyl ammonium salts DABCAS, presents a method of production of the molecular complex and different microbicidal compositions, which possess very low toxicity and excellent sterilizing activity, in short time. The synthesis comprises essentially three steps to obtain the basic molecular complex, as a mixed salt of alkylmethyl amines, alkylbenzyl amines quaternized and the dialkylbenzylcetyl ammonium.

This product presents germicidal activity, however their properties are enhanced "a posteriori" in the optimized compositions, detailed below.

## DETAILED DESCRIPTION OF THE INVENTION

The present invention includes many species of microbicidal compositions indicated by the general formula (I) . There are many species of compositions defined by the general formula (I).

According to the invention , the compositions satisfying the conditions (a) or (b) are preferable to act as a microbicidal composition. Further, the compositions satisfying the conditions (a) and (b) are more preferable to act as a microbicidal composition.

In case the condition (a) is satisfied, which means that a proportion of the molecule number of the R3 having more than 16 carbon atoms, for instance, a cetyl group, to the whole number of the molecules of the composition defined by the general formula (I) is more than 80%. The conditions (b), (c) (d) and (a'), (b'), (c') (d') indicates the same meaning.

The upper limit of these conditions are 100% that is , in case the condition (a) , the all the molecule group comprising R3 is a cetyl group.

A synthesized products is a mixture of the molecules containing a several replaceable group. If R3 consists only of a cetyl group, the purified molecule group consisting of a cetyl group is obtained by purification process. But in this invention, a microbial composition is not necessarily purified but may comprising of several group, because a cot for purifying is rather high and the cost-effect ratio is not preferable. In result, the value of the percentage of the composition is not necessarily 100%.

A molecule number ratio of the alkyl group having 16 carbons( cetyl group) to the whole molecule number of the composition is preferably more than 80 %( condition a), more preferably more than 85 %, further preferably 90 %( condition a'), the best condition is more than 95 %.

An anion defined as Y in general formula (I) having an ion value of 1 comprising of three halogen atoms and the ratio of the number of the halogen ion consisting of 3 halogen atoms to the whole number of anions in the composition is more than 50 % more preferably more than 60 %( condition b), more preferably more than 70 %, further preferably 80 %( condition b'), the best condition is more than 90 %.

A molecule number ratio of the alkyl group having 16 carbons( cetyl group) to the whole molecule number of the composition is preferably more than 80 %( condition a), more preferably more than 85 %, further preferably 90 %( condition a'), the best condition is more than 95 %.

A molecule number ratio of a benzyl group in the group R1 to the whole molecule number of the composition is preferably more than 70 %( condition c), more preferably more than 80%( condition c'), further preferably more than 90 %.

A proportion of the molecule number of the R2 having 14 to 16 carbon atoms to the whole molecule number of the composition defined by the general formula (I) is more than 40 %(condition d), more preferably more than 50%( condition d'), further preferably more than60 % the best is more than 70%.

More the above described conditions are satisfied and the higher the ratio of the specified molecule group, a toxicity of the composition becomes low and the microbicidal spectrum of the composition becomes wide.

Referring to the alkyl group, both the straight chain alkyl group or side chain alkyl group shows that same effect but considering the feasibility of commercial procurement , the straight alkyl group is preferable.

In the definition of anion Y, a halogen atom is selected from fluorine(F), chloride(Cl), bromine(Br) and ionide(I), preferable halogen atom is chloride, and ionide. An anion consisting of one halogen molecule is selected from Cl, Br, I and preferable molecule ion is Cl and I more specifically I is more preferable.

An anion (mono value anion) consisting of 3 halogen atoms consists of the same halogen molecule or may consisit of different halogen atoms. Preferable example of the 3 halogen atoms anion are I2I, I2Cl or ICl2.

A microbicidal composition of the invention may be containing an additional agent selected at least one composition from the compounds shown below as general formula of (III), (IV) and (V)

(1) A phosphate ester compound defined as a general formula (III) shown as follows:

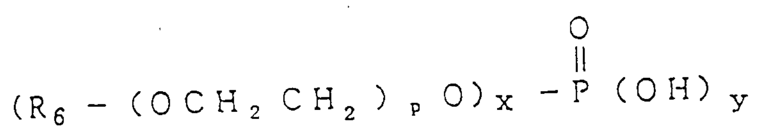

where x + y = 3 and R6 is an organic group having from 3 to 20 carbon atoms, and p is an integer of 8 to 14.

(2) A polyethanol amine defined as a general formula (IV) shown as follows:

where z is an integer of 2 to 10 and R7 is an alkyl group with 2 to 22 carbon atoms.

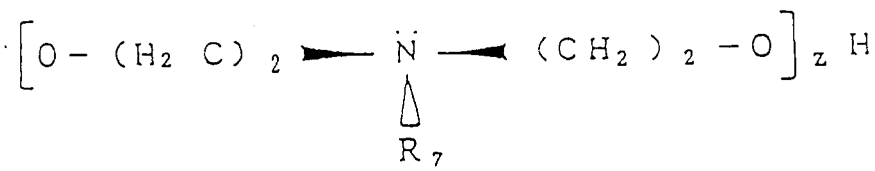

where R7 is an alkyl group having 2 to 22 carbon atoms.

(3) An ammonium oxide defined by the general formula (V) shown as follows;

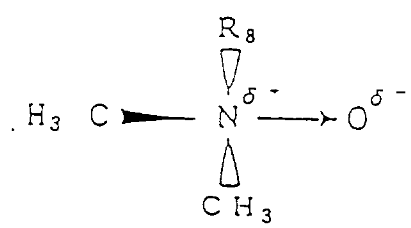

where R8 is an alkyl group with carbon atoms from 4 to 18.

A phosphate ester defined by the general formula (III) is a surfactant and act as a catalyst for promoting a chemical reaction during the production process of the composition defined by the general formula (I) .

A polyethanol amine defined as a general formula (IV) provides a stability to the microbicidal composition of this invention.

An ammonium oxide of the general formula (V) produces foam to give smoothness to the skin surface.

A microbicidal composition of this application comprises 70 to 90 % part by weight of a quaternary ammonium salt and 30 to 10 part by weight of additional agents.

More specifically, the composition comprises 70 to 90 part by weight of the quternary ammoniumu composition and 3 to 7 part by weight of a phosphate ester defined by the general formula (III), which is a surfactant, and 5 to 15 part by weight of a polyethanol amine defined as a general formula (IV) and 5 to 10 part by weight of an ammonium oxide defined as a general formula (V).

Preferably the microbicdal composition contains a quaternary ammonium salt defined by the general formula (I) and all the extra additional agents defined by the general formula (III) to (V).

The microbicdal composition contains a quaternary ammonium salt defined by the general formula (I) and all the extra additional agents defined by the general formula (III) to (V) and further in detail, the composition comprises 68 to 72 part by weight of a quaternary ammonium salt having an anion ion consisting of 3 halogen atoms, 6 to 10 part by weight of an anion consisting of one halogen atom, 3 to 7 part by weight of a phosphate ester defined by the general formula (III), 8 to 12 part by weight of a polyethanol amine defined by the general formula (IV) and 5 to 9 part by weight of ammonium oxide definde by the general formula (V).

More preferably, the microbicdal composition contains a quaternary ammonium salt defined by the general formula (I) and all the extra additional agents defined by the general formula (III) to (V) and further the composition comprises 70 part by weight of a quaternary ammonium salt having an anion ion consisting of 3 halogen atoms, 8 part by weight of an anion consisting of one halogen atom, 5 part by weight of a phosphate ester defined by the general formula (III), and 8 part by weight of ammonium oxide definde by the general formula (V).

I practical, the microbicidal composition of this invention and the additional agents are used as a solution in a medium. The concentration of the composition ranges 0.0001 % to 100 % by weight.

The medium may be water or a organic medium. The pH of the water medium ranges from 2 to 12, preferably a phosphate buffer solution or carbonate buffer solution whose pH is 5 to 8.5 is recommended.

In case the organic medium, water soluble medium such as methanol, ethanol, acetone are useable.

The composition of this invention may be used as a mixture with different microbicidal compositions.

The composition of this invention has a wide range of usage against the basillus fungi, yeast, candida, and Gram-positive rods, Bacillus subtilis, and rod-shaped bacteria acid-fast: Mycobacterium tuberculosis.

In more detail, the composition is used against Bacillus, such as Bacillus subtilis, Bacillus anthrcls; Mycobacterium such as Mycobacterium smegmatis, Mycobacterium tubeculosis, Mycobacterium kansasil; Pseudomonas such as Pseudomonas aeruginosa; Escherichia such as Escherichia coil; Staphyiococcussuch as Staphyiococcus aureus, Streptococcus such as Streptcoccus pyogenes; Salmonella such as Salmonella parahtyphi A ,Salmonella parathyphi B; Klebsiella, such as Klebsiella pneumoniae; Proteus, such as Proteus vulgaris; Vibrio such as Vibrio cholerae; Shigella such as Shigella flexner, Shigella dysenteriae, Shigella sonnel.

And further more, the composition of this invention is effective against the following baccilus of Aspergillus such as Aspergillus niger; Pennicillum, Cladoporium, Arternaria, Fusarium. The composition of this invention is effectiv to Yeast for instance, Candida albicans. The composition formulated in this invention, presents an effective virucidal action against the human inmunodeficiency virus (HIV), plague in plain expansion due to that it has not been taken the correct prevention.

These microbicidal compositions show a wide area of use as disinfectant of all non-adsorbing surfaces: specially sanitary applications as disinfecting and sterilizing critical surfaces of surgery; general medicine and surgeon tools; medical, veterinary and dentist devices; agricultural applications, as phytosanitary; as fungicidal and fungistatic applied on all surfaces and fibrous materials, natural, synthetics and/or mixed; air conditioning systems: devices and filters; and applicabel also as water disinfectant.

It is also used for sterilizing and inhibiting a growth of bacillus in the foods produced using microorganisms, dairy products, foods and drinks produced by fermentation, agricultural nutrients related to the agricultural chemistry, and edible plants or the like and used for controlling a growth of the microorganisms or fermentation process.

Synthesis

Synthesis of the quaternary ammonium salt indicated as general formula (I).

The compound alkylbenzyldimethylammonium Chloride, could be readily obtained by essentially well-known standard procedures with low cost.

As the first step, equimolar reaction of coconut dimethyl alkylamine and benzyl chloride,
should be promoted warming slightly with agitation of the reaction medium.

This reaction is exothermic, therefore the temperature of the vessel should be maintained by means of degree external cooling in the range of 80-90 degree centigrade for 1-2 hours.

The product is cooled to 20-30 degree centigrade, and the temperature is then raised to 65-85 degree centigrade for 1-2 hours after which the product is cooled again, yielding to a solution.

The product obtained, commercially named benzalkonium chloride BAC, is an adduct of benzyl chloride and alkyldimethylamine, derived from the middle cut of account oil distillate; the alkyl groups lie mainly in the range of C 10 to C16, which are optimal for the effectiveness of this type of quaternary amines. Using this preparation is possible to avoid purification of the final mixture afterwards. This synthesis begins with the exchange of dimethyl alkylamine by a dimethylalkylamine with elevated proportion of n-alkyl chain of C12(lauryldimethyl amine)and benzyl chloride. The equimolar reactants may be dissolved in a low alcohol such as isopropanol, (from 5 to 10% of the weight of the reactants). The reaction is maintained preferably at reflux temperature, until the reaction is essentially completed.

After this procedure, the main product is lauryl dimethyl benzylammonium chloride.

As the second step of the reaction, the n-alkyl chain is exchanged mol to mol by n-alkyl very long chains, which are conveniently obtained from a fatty alcohol with C16 to C18 carbon atoms and polyoxiethylenated with a number of 5 to 6 of oxiethylen units. This reaction can be made by mixing the reactants in a vessel equipped with a stirred and temperature raised about 40 degree centigrade during the reaction, the time required is about 1-2 hours. In order to aid this displacement, it has been necessary but not indispensable to add nonionic agents. Various well-known nonionic surface-active agents can be used in conjunction with lauryl dimethyl amine, particularly in this invention different nonionic agents have been selected according to the particular use of the microbicidal compositions.

Good examples of the more advantageous nonionic surface-active agents are the nonionic ethylene oxide condense-type, such as the polyethoxilates of alkyl-phenol in which the alkyl group contains about C 7 to C 11, and the condense contain about 9 to 17 ethylene oxide units. The dimethylnonyl polyethoxylate has been found to be particularly advantageous.

As the third step, in order to ensure the displacement of the chlorides to a specific halides, elemental molecular halogen is added. The optimal conditions should be established at this stage. Special care should be paid to keep the equilibrium halide/free-halogen towards a predominance of mixed halides species in the redox reaction. It. is important to notice that strict limits where necessary on the amount and type of acid available. When the dodecylbenzylamine reacts to obtain the quaternary salts of alkylbenzylamine mixed tri-halides as DABCAS. The acid used is orthophosphoric in order to reduce the pH values below 3.0.

Ethoxylated amines and quaternized ethoxylated amines have been used independently and in combination with mentioned nonionic surface-active agents to complex halogen species. These amines and quaternary compounds contain at least 15 ethyleneoxy groups so that the condensed ethylene oxides represent a substantial portion of the mixture.

As it has been shown, the production of the novel molecular complex of this invention is particularly simple. The final product obtained contains a mixture of alkylbenzylamine and dialkylbenzylcetyl ammonium salts, where halides and mixed tri-halides are the anionic species. It is important to notice that the active molecular complex of low toxicity is already present as a product of the reaction, when the procedure detailed above is followed.

However, particular formulation including the active DABCAS have been defined in order to improve its efficacy in each of the possible application example.

The acute toxicity of the novel invention was studied comparatively by the graphic log-logistic method. It was determined by orally administering of benzalkonium chloride and our product to mice, and the result is that where LD50 of the benzalkonium chloride was 569 mg/kg on the other hand LD50 of the composition of the invention was 1,300mg/kg.

The following examples illustrate the preparation and use of the different compositions. In addition, for each application, the efficacy and stability were determined by various independent procedures.

In this example a composition particularly effective against forming Gram-positive rods, Bacillus subtilis, and rod-shaped bacteria acid-fast:Mycobacterium tuberculosis, is indicated.

## BEST MODE FOR CARRYING OUT THE INVENTION

### Example 1

As the first step, equimolar reaction of coconut dimethyl alkylamine and benzyl chloride, should be promoted warming slightly with agitation of the reaction medium.

This reaction is exothermic, therefore the temperature of the vessel should be maintained by means of degree external cooling in the range of 85 degree centigrade for 2 hours. The product is cooled to 20-30 degree centigrade, and the temperature is then raised to 45degree centigrade for 2 hours after which the product is cooled again, yielding to a solution.

The product obtained, commercially named benzalkonium chloride BAC, is an adduct of benzyl chloride and alkyldimethylamine, derived from the middle cut of account oil distillate; the alkyl groups lie mainly in the range of C 10 to C16, which are optimal for the effectiveness of this type of quaternary amines. Using this preparation is possible to avoid purification of the final mixture afterwards. This synthesis begins with the exchange of dimethyl alkylamine by a dimethylalkylamine with elevated proportion of n-alkyl chain of C12(lauryldimethyl amine)and benzyl chloride. The equimolar

reactants may be dissolved in a low alcohol such as isopropanol, (from 5 to 10% of the weight of the reactants). The reaction is maintained preferably at reflux temperature, until the reaction is essentially completed.

After this procedure, the main product is lauryl dimethyl benzylammonium chloride.

Then the n-alkyl chain is exchanged mol to mol by n-alkyl very long chains, which are conveniently obtained from a fatty alcohol with cetyl alcohol. This reaction can be made by mixing the reactants in a vessel equipped with a stirred and the temperature is raised about 45 degree centigrade during the reaction, the time required is about 2 hours. In order to ensure the displacement of the chlorides to a specific halides, elemental molecular halogen is added. Special care should be paid to keep the equilibrium halide/free-halogen towards a predominance of mixed halides species in the redox reaction. An orthophosphoric acid is added to the sysytem in order to reduce the pH values below 3.0 and to produce $I_2Cl^-$.

Ethoxylated amines and quaternized ethoxylated amines have been used independently and in combination with mentioned nonionic surface-active agents to complex halogen species. These amines and quaternary compounds contain at least 15 ethyleneoxy groups so that the condensed ethylene oxides represent a substantial portion of the mixture.

As it has been shown, the production of the novel molecular complex of this invention is particularly simple. The final product obtained contains a mixture of alkylbenzylamine and dialkylbenzylcetyl ammonium salts, where halides and mixed tri-halides are the anionic species. It is important to notice that the active molecular complex of low toxicity is already present as a product of the reaction, when the procedure detailed above is followed.

However, particular formulation including the active DABCAS have been defined in order to improve its efficacy in each of the possible application example.

The acute toxicity of the novel invention was studied comparatively by the graphic log-logistic method.

The composition obtained by this example is as follows;

| | |
|---|---|
| Cetyl group | 90% |
| Alkyl group with 14 carbon atoms | 50% |
| Benzyl group | 80% |
| Anio $I_2Cl^-$ | 70% |

Example 2

| | |
|---|---|
| DiAlkylBenzylCetyl Ammonium Salts (DABCAS) | 45% (by weight) |
| Polyethylene Glycol | 8% |
| Coconut ethanol amide | 12% |
| Polyethoxylated Glyceride of fatty acid | 10% |
| Alkyldimetylaminooxide | 12% |
| Fatty acid aminotrigrycelo ester | 4% |
| Polyetyl amine or ester of fatty acid | 5% |
| Ortophosphoric ester | 2% |
| Buffer solution pH=8.0 | 2% |

As an example of its effectiveness, we have determined that 2% dilution of this composition, with a contact time of 1 minutes kills Bacillus subtilis, $2.0 \times 10^8$ cfu/ml and Mycobacterium tuberculosis, $1.0 \times 10^8$ cfu/ml.

Results are as follows;

| Species | Control | |
|---|---|---|
| Growth of Bacilus | | |
| Bacillus subtilis, | $2.0x10^8$ cfu/ml | none |
| Bacillus anthrcls, | $2.5x10^7$ cfu/ml | none |
| Escherichia coil, | $1.0x10^8$ cfu/ml | none |
| Enterobacter clocae | $2.0x10^8$ cfu/ml | none |
| Klebsiella pneumoniae | $1.9x10^8$ cfu/ml | none |
| Protus nurabillis | $1.1x10^8$ cfu/ml | none |
| Proteus vuigarls | $1.5x10^8$ cfu/ml | none |
| Pseudomonas aeruginosa | $3.7x10^8$ cfu/ml | none |
| Serratia marcescens | $1.6x10^8$ cfu/ml | none |
| Salmonella paratyphi A | $2.6x10^8$ cfu/ml | none |
| Salmonella paratyphi B | $1.7x10^8$ cfu/ml | none |
| Shigella flexneri | $4.7x10^7$ cfu/ml | none |
| Shigella dysenteriae | $7.3x10^7$ cfu/ml | none |
| Shigella sonnel | $1.6x10^8$ cfu/ml | none |
| Staphyiococcus 209P | $3.0x10^7$ cfu/ml | none |
| Staphyiococcus aureus | $1.5x10^8$ cfu/ml | none |
| MRSA | $1.0x10^8$ cfu/ml | none |
| Vibrio cholere | $1.9x10^8$ cfu/ml | none |
| Microccus luteus | $1.2x10^8$ cfu/ml | none |
| Mycobacterium smegmatis | $1.0x10^8$ cfu/ml | none |
| Mycobacterium tubeculosis | $1.0x10^8$ cfu/ml | none |
| Mycobacterium kansasil | $2.4x10^8$ cfu/ml | none |
| Saccharomyces cervisiae | $8.0x10^8$ cfu/ml | none |
| Candida albicans | $1.0x10^8$ cfu/ml | none |

BACTERICIDAL ACTIVITY

A 2% dilution of the composition formulated in this example, presents a particular action as bactericidal, killing with only 1 minute of contact time a broad spectrum of bacteria such as Gram negatives: Pseudomonas aerginosa, $3.7x10^8$ cfu/ml, with a elevated pathogenic potential, the opportunist Escherichia coli, $1.0x10^8$ cfu/ml, and also Gram-positives: Staphylococcus aures, $1.5x10^8$ cfu/ml, Streptococcus pyogenes, $1x10^8$ cfu/ml; and agents of "thyfus":Salmonella parathyphi A, 2. $6x10^8$ cfu/ml, and Salmonellaparathyphi B, $1.7x10^8$ cfu/ml; the pathogenic bacteria: Klebsiella pneumoniae, $1.9x10^8$ cfu/ml, Proteus vulgaris, $1.5x10^8$ cfu/ml; the cholerae agent, Vibrio cholerae, $1.9x10^8$ cfu/ml; and also shigella flexneri, $4.7x10^7$ cfu/ml, Shigella dysenteriae, $7.3x10^7$ cfu/ml.

Example 3

FUNGICIDAL ACTIVITY

The following composition is very effective as fungicidal, the test was carried out following the rules of Japanese Industrial Standard (JIS)Z 2911.

The mold tested were:

1. Penicillum sp,
2. Fusarium sp.
3. Pnecillium sp.
4. Alternarium sp,
5. Aspergillus niger,

which are frequently present in walls, air conditioning systems, converter devices, filters, air conducts; and also grow in fibrous material natural, synthetic and mixed fibers.

The cultivation is conducted at temperature 27 plus minus 2 degree centigrade for one, two and three weeks.

An evaluation follows the JIS criteria described below.

1:Fungi growth covers more than 2/3 of the test culture medium
2:Fungi growth covers less than 2/3 of the test culture medium
3:Fungi growth is not detected

Results are as follows;

| | 1 week | 2 week | 3week |
|---|---|---|---|
| 1 The control; 400 dilution | 3 | - | - |
| 2 800 dilution | 3 | 3 | 3 |
| 3 0.5%,1.0%,10%,50% | 3 | 3 | 3 |
| 4 100, 200 dilution on filter | 3 | 3 | 3 |
| 5 2% against Fussrium | 3 | 3 | 3 |
| 6 1%.2%10%50% on culture medium | 3 | 3 | 3 |
| 7 general products | 3 | 3 | 3 |

The most effective combination for fungicidal activity consists of 0.1 to 0.5% of composition 3, diluted in equal parts in weight of water and isopropanol. In this way the active complex is proved to show the best fungistat activity at 0.2% of concentrations.

Example 4

The composition prepared in the example 1 is tested against Bacillus subtilis with a control of bobidone iodoform, and the results are as follows.

| | Control | 1 minute | 5 minutes |
|---|---|---|---|
| Composition of the invention | $2x10^8$ | 0 | 0 |
| Iodform | $2x10^8$ | $2x10^8$ | $2x10^8$ |

Example 5

| | |
|---|---|
| DABCAS | 45% |
| Glycerol, propanotriol | 14% |
| Polyethoxylated Glyceride of fatty acid | 20% |
| Ortophosphoric ester | 5% |
| Polyoxiethylenated amine oxide | 14% |
| Buffer solution pH=8.0 | 2% |

As an example of its effectiveness, we have determined that 2% dilution of this composition, with a contact time of 1 minute kills Bacillus subtilis, $2.0x10^8$ cfu/ml and Mycobacterium tuberculosis, $1.0x10^8$ cfu/ml.

Example 6

| | |
|---|---|
| DABCAS | 44% |
| Glycelol | 13% |
| Polyoxiethylenated amine oxide | 15% |
| Polyethoxylated primary alcohol | 21% |
| Ortophosphoric acid and esters | 5% |
| Buffer solution pH=7.0 | 2% |

As an example of its effectiveness, we have determined that 2% dilution of this composition, with a contact time of 1 minute kills completely Psudomoan acruginosa $3.7x10^8$ cfu/ml, Eschericha coil $1.0x10^8$ cfu/ml, Staphylococcus aureus $1.5x10^8$ cfu /ml, Streptococcus pygenes $1x10^8$ cfu/ml, Salmonella parathyphi A $2.6x10^8$ cfu/ml, Salmonella parathyphi B $1.7x10^8$ cfu/ml, Klebsiella pneumoiae $1.9x10^8$ cfu/ml, Proteins vulgaris $1.5x10^8$ cfu /ml, Vibrio cholerae $1.9x10^8$ cfu/ml, Shigella flexneri 4. $7x10^7$ cfu.ml, Shigella dyxenteriae $3x10^7$ cfu/ml.

Example 7

The following composition is effective against Aspergillus niger, Pnenixillium sp. Cladosporium sp, Alternaria sp. and Fusarium sp. which are found on the wall, air conditioner, converters, filters, air ducts, synthesized or natural fibers.

| | |
|---|---|
| DABCAS | 40% |
| Coconut Ethanol amide | 10% |
| Poly Ethylene Glycol | 12% |
| Polyethoxylated alcohol fully saturated | 14% |
| Glycerol ester of fatty acid | 22% |
| Ortophosphoric acid and esters | 2% |

The composition is solved into a water and isopropanole medium with concentration from 0.1 to 0.5 and found to be 0.2% dilution is most effective.

Example 8

SPORICIDAL ACTIVITY

The composition formulated in this example, was the most efficacious as sterilizing agent against bacterial and fungi molds spores. In this case the effectiveness is closely determined by the pH. The best values are within 3.0 to 3.6.

| | |
|---|---|
| DABCAS | 50% |
| Glycol, pentanediol | 11% |
| Coconut Ethanol amide | 14% |
| Polyethoxylated fatty alcohol | 15% |
| Glycerol ester of fatty acid | 7% |
| Ortophosphoric acid | 3% |

The principal use of the following composition is recommended as general antiseptic germicide. The formulation is optimized for the care of skin, including dermoprotector substances and also hydrophilyc products for maintenance if the natural hydratation of human epidermis.

Example 9

This composition is applicable to the skin and contains a skin protection agent and a humidifying agent among the composition.

| | |
|---|---|
| DABCAS | 40% |
| Sodium lauryl ether sulfate | 23% |
| Coconut ethanol amide | 7% |
| Glyceryc ester of fatty acid | 12% |
| Alkyldimethyl aminoxide | 13% |
| Coconut amidobetaine | 5% |

This composition is specially indicated for sanitary use of medical surgeons and members of all health professions, who demand products for handcleansing with a rapid disinfecting and residual protection against immediate re-infection. This application has non-ionic surfactants with high affinity to the skin, in order to ensure an effective remanent bacteriostat activity, obtaining a good prophylactic protection over a broad spectrum.

Example 10

VIRUCIDAL ACTIVITY

The composition formulated in this example, presents an effective virucidal action against the human inmunodeficiency virus (HIV), plague in plain expansion due to that it has not been taken the correct prevention. A dilution of 0.1%, in 30 seconds is effective to inactive $1x10^7$ viruses/ml of AIDS pathogen agents.

| | |
|---|---|
| DABCAS | 45% |
| Glycerol, propanetriol | 12% |
| Glycerid ester of fatty amines | 14% |
| Coconut ethanol amide | 16% |
| Glycol, pentanediol | 10% |
| Ortophosphoric acid and ester | 3% |

This example illustrates agermicidal composition of general use to clean and make free from infection all hard non-absorbent environmental surfaces. The new invention can disinfect, disinfect, destroying harmful microorganisms in: dialysis tubing, endoscope devices, respirators and draining tubes, and those medical tools where the sterilization by steam or ethylene oxide are either impractical or physiologically disfavored.

Example 11

| | |
|---|---|
| DABCAS | 46% |
| Alkyldimethyl aminoxide | 14% |
| Propylene glycol | 16% |
| Glycerol, propanetriol | 3% |
| Glycerid ester of fatty acid | 11% |
| Ortophosphoric acid and ester | 2% |
| Coconut Ethanol amide | 8% |

The concentration at which the composition of this example completely inhibits the growth and kill bacteria, fungi, viruses and spores, were sensitively lower than the prior art. This application presents clearly marked synergistic effects being capable to suppress microbial activity at lower concentration than a half of the concentration used alone by the previous art. As example, a 2% dilution of this composition, with 1 min. of contact time kills: Mycobacterium smegmatis, $1. 0x10^8$ cfu/ml, Mycobacterium kansasii, $2.4x10^8$ cfu/ml, Saccharomices cerevisiae, 8.0x108 cfu/ml, Candida albicans, $1x10^8$ cfu/ml, and Bacillus anthracis, $2.5x10^7$ cfu/ml.

INDUSTRIAL APPLICABILITY

As it has been illustrated in each example, the effectiveness of low concentration of the active ingredients have been clearly demonstrated for each detailed sterilant composition. The advantage of being effective to kill a broad spectrum of microorganisms in short time have also been shown. The scope of legal protection is set forth in the claims which follow now.

These microbicidal compositions show a wide area of use as disinfectant of all non-adsorbing surfaces: specially sanitary applications as disinfecting and sterilizing "critical surfaces" of surgery; general medicine and surgeon tools; medical, veterinary and dentist devices; agricultural applications, as phytosanitary; as fungicidal and fungistatic applied on all surfaces and fibrous materials, natural, synthetics and/or mixed; air conditioned systems: devices and filters; and use also as disinfectant.

It is also used for sterilizing and inhibiting a growth of bacillus in the foods produced using microorganisms, dairy products, foods and drinks produced by fermentation, agricultural nutrients related to the agricultural chemistry, and edible plants or the like and used for controlling a growth of the microorganisms or fermentation process.

## Claims

**1.** A microbicidal composition defined as a general formula (I) shown as follows:

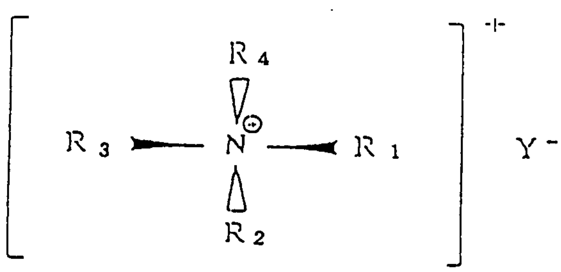

where:

R1 is an alkyl group having from 6 to 18 carbon atoms or a benzyl group;
R2 is selected from the group consisting of an alkyl group having from 1 to 18 carbon atoms, or a hydrogen atom, and an alkenyl group or an aralkyl group having 8 to 18 carbon atoms, R3 is an independent alkyl group having from 12 to 22 carbon atoms, and
R4 is an alkyl rest with 8 to 18 carbon atoms, or a composition defined by the general formula (II) shown as follows:

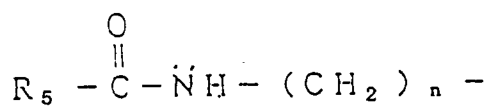

where R5 is an alkyl rest with 2 to 22 carbon atoms, n is an integer of 2 or 3, and Y is an anion comprising of 1 to 3 halogen-halide atoms,

wherein the following conditions (a) and/ or (b) are satisfied.

(a) A proportion of the molecule number of the R3 having more than 16 carbon atoms to the whole number of the molecules of the composition is more than 80%.
(b) A proportion of the number of the halogen ion consisting of 3 halogen atoms to the whole number of anions in the composition is more than 50 %.

**2.** A microbicidal composition of the claim 1 wherein above described conditions (a) and / or (b) are satisfied and further the following conditions (c) and/ or (d) are satisfied.

(c) A proportion of the molecule number of the R1 having a benzyl group to the whole number of the molecules of the composition is more than 70% and/or
(d) A proportion of the molecule number of the R2 having 14 to 16 carbon atoms to the whole molecule number of the composition is more than 40 %.

**3.** A microbicidal composition of the claim 1 or 2 wherein said conditions (a), (b), (c) and (d) are all satisfied.

**4.** A microbicidal composition of the claim 1 to 3 wherein the following conditions (a') and/ or (b') are satisfied.

(a') A proportion of the molecule number of the R3 having more than 16 carbon atoms to the whole number of the molecules of the composition is more than 90% or

(b') A proportion of the number of the halogen ion consisting of 3 halogen atoms to the whole number of anions in the composition is more than 70 %.

**5.** A microbicidal composition of the claim 1 to 4 wherein above described conditions (a') and / or (b') are satisfied and further the following conditions (c') and/ or (d') are satisfied.

(c') A proportion of the molecule number of the R1 having a benzyl group to the whole number of the molecules of the composition is more than 80% or

(d') A proportion of the molecule number of the R2 having 14 to 16 carbon atoms to the whole molecule number of the composition is more than 50 %.

**6.** A microbicidal composition of the claim 1 to 5 wherein said conditions (a'), (b'), (c') and (d') are all satisfied.

**7.** A microbicidal composition of the claim 1 to 6 wherein containing an additional agent selected at least one composition from the compounds shown below as general formula of (III), (IV) and (V)

(1) defined as a general formula (III) shown as follows:

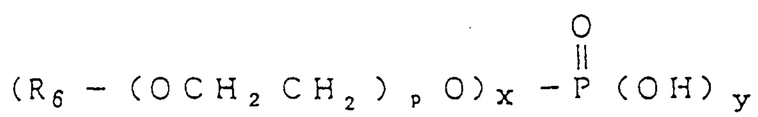

where x + y = 3 and R6 is an organic group having from 3 to 20 carbon atoms, and p is an integer of 1 or 2.

(2) a polyethanol amine defined as a general formula (IV) shown as follows:

where z is an integer of 2 to 10 and R7 is an alkyl group with 2 to 22 carbon atoms.

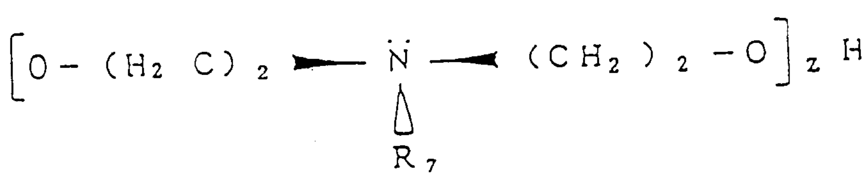

(3) An ammonium oxide of the general formula (V) shown as follows;

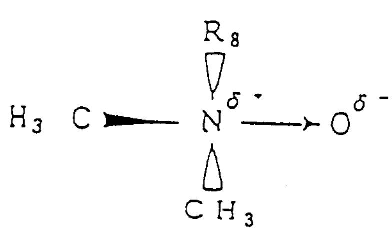

where R8 is an alkyl rest with carbon atoms from 4 to 18.

**8.** A microbicidal composition of the claim 7 wherein
comprising 70 to 90 part by weight of quaternary ammonium salt described by the general formula (I) and 30 to 10 part by weight of at least one additional agent selected from the general formula (III), (IV) and (V).

**9.** A microbicidal composition of the claim 8 wherein
comprising 70 to 90 part by weight of quaternary ammonium salt described by the general formula (I), 3 to 7 part by weight of an orthophosphoric ester described as general formula (III) or 5 to 15 part by weight of polyethanol amine described as general formula (IV) or 5 to 10 part by weight of an ammonium oxide described as general formula (V).

**10.** A microbicidal composition of the claim 8 to 9 wherein
containing all three components of the additional agents shown as general formula of (III), (IV) and (V) .

**11.** A microbicidal composition of the claim 6 to 10 wherein
comprising 68 to 72 part by weight of the quaternary ammonium salt having three anions consisting of halogen atoms described by the general formula (I) and 6 to 10 part by weight of the quaternary ammonium salt having one anion consisting of halogen atoms described by the general formula (I), 3 to 7 part by weight of the orthophosphoric ester described as general formula (III), 8 to 12 part by weight of the polyethanol amine described as general formula(IV) and 5 to 9 part by weight of the ammonium oxide described as general formula(V).

**12.** A microbicidal composition of the claim 11 wherein
comprising 70 part by weight of the quaternary ammonium salt having three anions consisting of halogen atoms described by the general formula (I) and 8 part by weight of the quaternary ammonium salt having one anion consisting of halogen atoms described by the general formula (I), 5 part by weight of the orthophosphoric ester described as general formula (III), 10 part by weight of the polyethanol amine described as general formula(IV) and 8 part by weight of the ammonium oxide described as general formula(V).

**13.** A microbicidal composition of the claim 1 to 12 wherein
a total amount of the additional agent is 0.0001 to 100 % by weight to the total weight of the microbicidal composition .

**14.** A microbicidal composition of the claim 1 to 13 wherein
the composition is dissolved with water or with an organic solvent.

**15.** A method of sterilizing or killing all kinds of bacteria, fungi, spores and viruses on the surfaces of human body or materials using solely the microbicidal composition of the claim 1 to 14 or combination use of other sterilize.

**16.** A method of sterilizing using the microbicidal composition of the claim 15 wherein sterilizing is conducted in hospitals, pharmaceutical factories, and in pharmacies.

**17.** A method of sterilizing using the microbicidal composition of the claim 1 to 14 wherein sterilizing air conditioning apparatus and air filters.

**18.** A method of sterilizing using the microbicidal composition of the claim 1 to 14 wherein sterilizing is conducted in hand cleansing of medical surgeons, as well as dentist, and medical uses, also for sanitary workers in medical activities and in pharmacies.

**19.** A method of sterilizing using the microbicidal composition of the claim 1 to 14 wherein sterilizing a bacillus on the surface of the human body, synthetic fibers, natural fibers or other materials.

**20.** A method of sterilizing of claim 1 to 14 wherein sterilizing a bacillus in the foods produced using microorganisms, dairy products, foods and drinks produced by fermentation, agricultural nutrients related to the agricultural chemistry, and edible plants or the like.

**21.** A method of sterilizing of claim 1 to 14 wherein controlling a growth of the microorganisms or fermentation process of the foods produced using microorganisms, dairy products, foods and drinks produced by fermentation, agricultural nutrients related to the agricultural chemistry, and edible plants or the like.

**INTERNATIONAL SEARCH REPORT**

International application No.
PCT/JP95/01790

**A. CLASSIFICATION OF SUBJECT MATTER**

Int. $Cl^6$ A01N33/12, 37/20

According to International Patent Classification (IPC) or to both national classification and IPC

**B. FIELDS SEARCHED**

Minimum documentation searched (classification system followed by classification symbols)

Int. $Cl^6$ A01N33/12, 37/20

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | Khim.-Farm. Zh., Vol. 17, No. 6 (1983) V. E. Limanov et al., "Synthesis and bactericidal activity of salts of higher aliphatic amines", p. 675-679 | 1 - 21 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| November 20, 1995 (20. 11. 95) | December 26, 1995 (26. 12. 95) |
| Name and mailing address of the ISA/ Japanese Patent Office | Authorized officer |
| Facsimile No. | Telephone No. |

Form PCT/ISA/210 (second sheet) (July 1992)